# EUROPEAN PATENT APPLICATION

(11) **EP 2 918 571 A1**
(43) Date of publication of application: **16.09.2015**
(21) Application number: 14181318.8
(22) Date of filing: 18.08.2014
(51) Int. Cl.: C05G 3/04, C05D 9/00, B09B 1/00, B09C 1/00

(54) **A METHOD FOR PRODUCING AN ARTIFICIAL SOIL**

(30) Priority: 14.03.2014 PL 40753314
(71) Applicant: Politechnika Lubelska, 20-618 Lublin (PL); Uniwersytet Przyrodniczy, 20-950 Lublin (PL)
(72) Inventor: Pawlowski, Lucjan, 20-710 Lublin (PL); Pawlowski, Artur, 20-710 Lublin (PL); Kwiatkowski, Zygmunt, 21-003 Ciecierzyn (PL); Baran, Stanislaw, 20-448 Lublin (PL); Wesolowski, Marian, 20-807 Lublin (PL); Zukowska, Grazyna, 20-282 Lublin (PL); Wójcikowska-Kapusta, Anna, 20-337 Lublin (PL)
(74) Representative: Kaminski, Piotr

(57) **Abstract**

Disclosed is the method for producing an artificial soil from drill cuttings obtained when drilling for and extracting shale gas, which method is characterised in that drill cuttings (40-50 wt%) from drilling wells are mixed with digested sludge (20-30 wt%) from municipal sewage treatment works and ground gangue (10-20 wt%).

## Description

The invention is a method for producing artificial soil from drill cuttings obtained when drilling for and extracting shale gas.

Large quantities of mineral waste containing drill cuttings are obtained when drilling for and extracting shale gas. These inert materials, on which virtually no vegetation can grow, are usually stored as burdensome waste. Although it is true that attempts have been made to restore typical soil properties to these materials, however, they refer though only to specific types of waste. U.S. Patent No. 6419722B2 describes a method for making an artificial soil, according to which, 1-99% cellulose waste, 0.01-10% calcium compounds, 0.1-10% charcoal or other forms of carbon, and 0.05-5% ammonium nitrate, ammonium sulphate or calcium nitrate is added to the mineral waste. This mixture is then ground to obtain a homogenised mixture. Such a mixture allows soil properties to be restored in the waste, but it is of limited use due to the low availability of waste cellulose. Furthermore, a large addition of up to 5% of well-dissolved salts poses a real threat of groundwater contamination with the nitrate and ammonium ions.

U.S. Patent No. 5472475 describes a method of mixing sand and basalt with cellulose from recycled paper, composted human or animal waste, as well as waste from cereal crops, vegetable or fruit residuals. This is then mixed with calcium silicate or slag or quicklime and a solution of ammonium sulphate or nitrate, charcoal or an equivalent amount of sodium phosphate. So prepared a mixture takes on the properties of soil. The disadvantage of this method is its complex composition which undoubtedly increases the cost of preparing the artificial soil. Furthermore, the addition of leachable ammonium sulphate and nitrate threatens to contaminate the groundwater with undesirable ammonium and nitrate ions.

Another method is described in U.S. Patent No. 1871050, in which moistened paper pulp is added to the degraded soil surrounding the plant.

In turn, U.S. Patent No. 2881066 uses a mixture of nitrogen and phosphorus fertilisers mixed with wood-like waste, which takes on the role of humus substances whilst in U.S. Patent No. 2946675 wood-like waste was replaced with composted sawdust. In U.S. Patent No. 3356481 uncomposted sawdust was used for the same purpose.

The essence of inventive method for obtaining an artificial soil from drill cuttings obtained when drilling for and extracting shale gas is that these drill cuttings obtained from drilling wells are mixed in the amount of 40-60 wt% with 20-30 wt% of digested sludge from municipal sewage treatment plant and 10-20 wt% of ground gangue.

An advantage of this method is that, after homogenising the mixture an artificial soil is obtained that allows vegetation to grow.

### Example:

Drill cuttings obtained when drilling for and extracting shale gas in the amount of 50 wt% were mixed with 30 wt% of digested sludge from municipal sewage treatment works in the amount of and 20 wt% of ground gangue. The resulting mixture, which takes on artificial soil characteristics, allows to be used in the reclamation of excavations e.g. in the exploitation of rocky raw materials.

## Claims

1. A method for producing artificial soil from drilling cuttings obtained when drilling for and extracting shale gas **characterised in that** the drill cuttings from drilling wells in the amount of 40-50 wt% are mixed with digested sludge from municipal sewage treatment plant in the amount of 20-30 wt% and with ground gangue in the amount of 10-20 wt%.
